# EUROPÄISCHE PATENTANMELDUNG

(11) **EP 4 429 079 A1**
(43) Veröffentlichungstag der Anmeldung: **11.09.2024**
(21) Anmeldenummer: 21962956.5
(22) Anmeldetag: 05.11.2021
(51) Int. Cl.: H02K 3/28, H01R 4/48, H01R 41/00, H01R 43/00, H01R 43/02

(54) **KOLLEKTORRING FÜR EINEN MOTOR UND MOTOR**

(71) Anmelder: Schaeffler Technologies AG & Co. KG, 91074 Herzogenaurach (DE)
(72) Erfinder: HUANG, Jiancheng, Shanghai 200336 (CN); DAI, Yi, Shanghai 200231 (CN)
(86) Internationale Anmeldenummer: PCT/CN2021/129052
(87) Internationale Veröffentlichungsnummer: WO 2023/077443

(57) **Zusammenfassung**

Die vorliegende Anmeldung stellt einen Kollektorring für einen Motor und einen Motor bereit. Der Kollektorring weist ein Verbindungsende (100) auf, wobei das Verbindungsende (100) einen Basisteil (1) und einen Schweißteil (22) umfasst, der relativ zum Basisteil (1) vertikal ist; der Basisteil (1) mit einem Positionierungsloch (11) und einem elastischen Teil (12) versehen ist, wobei das Positionierungsloch (11) ein Durchgangsloch ist, wobei das Positionierungsloch (11) verwendet wird, um den Durchgang eines Statordrahtaustrittsendes (200) des Motors zu ermöglichen, und wobei der elastische Teil (12) so ausgebildet ist, dass er in der Lage ist, eine elastische Kraft auf das Statordrahtaustrittsende (200) entlang einer ersten Richtung (X) auszuüben, die als Längsrichtung des Basisteils (1) dient, sodass zwei gegenüberliegende Seitenoberflächen des Statordrahtaustrittsendes (200) entlang der ersten Richtung (X) in engem Kontakt mit dem Basisteil (1) bzw. dem Schweißteil (22) stehen.

## Beschreibung

### Technisches Gebiet

Die vorliegende Anmeldung betrifft das Gebiet der Motoren und insbesondere einen Kollektorring für einen Motor und einen Motor.

### Hintergrund

Im Anwendungsumfeld von New-Energy-Fahrzeugen muss ein Antriebsmotor Vibrationsbelastungen standhalten. Ein Kollektorring wird durch Schweißen mit einem Statordrahtaustrittsende verbunden, wobei die mechanische Festigkeit der Schweißpunkte relativ gering ist, was dazu führt, dass die Schweißpunkte bei einem Vibrationstest fehleranfällig sind. Es gibt mögliche Lösungen, um die Auswirkungen von Vibrationsbelastungen auf die Schweißpunkte zu reduzieren und Ausfällen der Schweißpunkte entgegenzuwirken, unter anderem:
(1) Reduzieren des Gewichts des Kollektorrings. Der Kollektorring besteht jedoch aus einer dreiphasigen Kupferschiene, einem Spritzgussteil und einem Verbindungsteil, und das Gewicht des Kollektorrings kann angesichts des hohen Stroms, den der Kollektorring transportieren muss, und der Sicherheitsanforderungen für die elektrische Freigabe nur in begrenztem Umfang reduziert werden.
(2) Bereitstellen zusätzlicher Befestigungspunkte für den Kollektorring. Dadurch kann zwar die Beanspruchung an den Schweißpunkten deutlich reduziert werden, allerdings könnte eine derartige Lösung leicht platz- und montagetechnisch begrenzt sein, und es ist schwierig, geeignete Abstützpunkte an einem Motorgehäuse zu finden.
(3) Erhöhen der Anzahl der Schweißpunkte, um die Anzahl der Abstützpunkte zu erhöhen. Die Beanspruchung an einem einzelnen Schweißpunkt kann durch Erhöhen der Anzahl der Schweißpunkte reduziert werden, allerdings werden die Anforderungen an die wahre Position des Statordrahtaustrittsendes strenger, was die Herstellungskosten und die Ausschussrate eines Stators erhöht.

### Kurzdarstellunq

Der Zweck der vorliegenden Anmeldung besteht darin, die Mängel des vorstehend genannten Standes der Technik zu überwinden oder mindestens zu verbessern und einen Kollektorring für einen Motor und einen Motor bereitzustellen, um die Beanspruchung zu reduzieren, die unter der Einwirkung von Vibrationen und anderen äußeren Kräften an Schweißstellen des Kollektorrings und des Statordrahtaustrittsendes zentriert erzeugt wird, und somit zu verhindern, dass die Schweißpunkte bei Vibrationsbelastungen störanfällig werden.

Die vorliegende Anmeldung stellt einen Kollektorring für einen Motor bereit. Der Kollektorring weist ein Verbindungsende auf, wobei das Verbindungsende einen Basisteil und einen Schweißteil umfasst, der relativ zum Basisteil vertikal ist; wobei der Basisteil mit einem Positionierungsloch und einem elastischen Teil versehen ist, wobei das Positionierungsloch ein Durchgangsloch ist, wobei das Positionierungsloch verwendet wird, um den Durchgang eines Statordrahtaustrittsendes des Motors zu ermöglichen,

und der elastische Teil so ausgebildet ist, dass er in der Lage ist, entlang einer ersten Richtung, die als Längsrichtung des Basisteils dient, eine elastische Kraft auf das Statordrahtaustrittsende auszuüben, sodass zwei gegenüberliegende Seitenoberflächen des Statordrahtaustrittsendes entlang der ersten Richtung in engem Kontakt mit dem Basisteil bzw. dem Schweißteil stehen.

Bei mindestens einer Ausführungsform ist eine Abmessung des Positionierungslochs entlang einer zweiten Richtung gleich derjenigen des Statordrahtaustrittsendes entlang der zweiten Richtung, die erste Richtung verläuft senkrecht zur zweiten Richtung und die zweite Richtung stimmt mit einer Breitenrichtung des Basisteils überein.

Bei mindestens einer Ausführungsform umfasst das Verbindungsende ferner einen Begrenzungsteil, der Begrenzungsteil umfasst einen Übergangsteil und den Schweißteil, der Schweißteil ist über den Übergangsteil mit dem Basisteil verbunden, der Begrenzungsteil und der elastische Teil befinden sich auf zwei gegenüberliegenden Seiten des Positionierungslochs in der ersten Richtung und unter der Wirkung der durch den elastischen Teil ausgeübten elastischen Kraft kann das Statordrahtaustrittsende an dem Schweißteil anliegen.

Bei mindestens einer Ausführungsform sind der Basisteil und der Begrenzungsteil als ein Stück ausgebildet.

Bei mindestens einer Ausführungsform sind der elastische Teil und der Basisteil als ein Stück ausgebildet.

Bei mindestens einer Ausführungsform werden das Positionierungsloch und der elastische Teil gleichzeitig gebildet. Nachdem der Basisteil gestanzt wurde, ist ein Teil, der sich vom Basisteil aus biegt und verformt, der elastische Teil, und ein ausgehöhlter Teil, der aufgrund des Verformens gebildet wurde, ist das Positionierungsloch.

Bei mindestens einer Ausführungsform ist eine Abmessung des Übergangsteils entlang einer zweiten Richtung größer als diejenige des Schweißteils entlang der zweiten Richtung, die Abmessung des Schweißteils entlang der zweiten Richtung ist größer als diejenige des Statordrahtaustrittsendes entlang der zweiten Richtung, die zweite Richtung ist senkrecht zur ersten Richtung, und die zweite Richtung stimmt mit der Breitenrichtung des Basisteils überein.

Bei mindestens einer Ausführungsform ist der Schweißteil vom Übergangsteil zu einer Seite hin versetzt, auf der sich der elastische Teil befindet.

Die vorliegende Anmeldung stellt ferner einen Motor bereit, der ein Statordrahtaustrittsende und den Kollektorring für einen Motor gemäß einer der vorstehend genannten technischen Lösungen umfasst, und das Statordrahtaustrittsende ist durch Schweißen mit dem Schweißteil des Kollektorrings verbunden.

Bei mindestens einer Ausführungsform ist der Basisteil mit einer axialen Endfläche eines Stators des Motors verbunden und der Schweißteil erstreckt sich entlang einer axialen Richtung des Stators.

Durch Übernehmen der vorstehend genannten technischen Lösungen wird das Statordrahtaustrittsende so positioniert, dass die durch den Positionsfehler des Statordrahtaustrittsendes erzeugte Beanspruchung geringer ist, sodass die Schweißstabilität höher ist und der Schweißpunkt eine höhere Festigkeit aufweist. Infolgedessen hält der Schweißpunkt Vibrationsbelastungen stand und ist nicht störanfällig.

### Kurzbeschreibung der Zeichnungen

FIG. 1 zeigt eine schematische Darstellung des Aufbaus eines Kollektorrings für einen Motor und eines Statordrahtaustrittsendes gemäß Ausführungsformen der vorliegenden Anmeldung.
FIG. 2 zeigt aus einer anderen Perspektive eine schematische Darstellung des Aufbaus eines Kollektorrings für einen Motor und eines Statordrahtaustrittsendes gemäß Ausführungsformen der vorliegenden Anmeldung.
FIG. 3 zeigt einen Kollektorring für einen Motor gemäß Ausführungsformen der vorliegenden Anmeldung.

### Ausführliche Beschreibung

Im Folgenden werden in Bezug auf die beigefügten Zeichnungen beispielhafte Ausführungsformen der vorliegenden Anmeldung beschrieben.

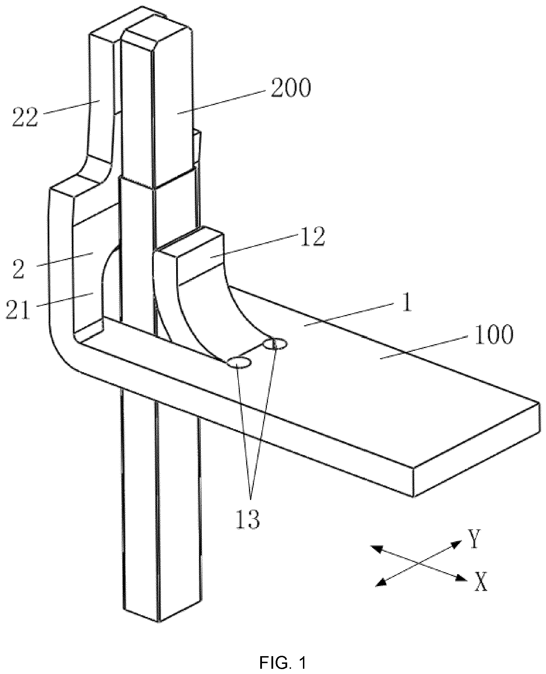

Unter Bezugnahme auf die Figuren 1 bis 3 stellt die vorliegende Anmeldung einen Motor bereit, der einen Stator und einen Kollektorring umfasst. Der Kollektorring weist ein Verbindungsende 100 auf, der Stator weist ein Statordrahtaustrittsende 200 auf, und das Verbindungsende 100 ist durch Schweißen mit dem Statordrahtaustrittsende 200 verbunden, um eine elektrische Verbindung zu erzielen. Der Motor kann ein Motor sein, der in New-Energy-Fahrzeugen verwendet wird, ist aber nicht darauf beschränkt. Der Motor kann hierbei ein Elektromotor zum Umwandeln elektrischer Energie in mechanische Energie, ein Generator zum Umwandeln mechanischer Energie in elektrische Energie oder eine Maschine (Motor) sein, die sowohl zum Antreiben als auch zum Erzeugen von Elektrizität verwendet werden kann.

Das Verbindungsende 100 umfasst einen Basisteil 1 und einen Begrenzungsteil 2, das Verbindungsende 100 liegt insgesamt in der Form einer gebogenen Platte vor, der Begrenzungsteil 2 ist mit dem Basisteil 1 verbunden, und der Basisteil 1 und der Begrenzungsteil 2 können senkrecht zueinander stehen (auch im Wesentlichen senkrecht). Der Basisteil 1 und der Begrenzungsteil 2 können zum Beispiel durch Biegen einer Metallplatte aus einem Stück ausgebildet sein, um den Basisteil 1 und den Begrenzungsteil 2 zu bilden.

Der Basisteil 1 kann zum Verbinden mit dem Stator des Motors, insbesondere zur festen Verbindung mit der axialen Endfläche des Stators des Motors, verwendet werden. Zumindest ein Teil des Basisteils 1 kann mit einem isolierenden Material wie etwa Kunststoff beschichtet sein und der Basisteil 1 kann ferner einen Verbindungsteil zum Einleiten von externer elektrischer Energie in das Statordrahtaustrittsende 200 oder zum Ableiten elektrischer Energie aus dem Statordrahtaustrittsende 200 umfassen.

Der Basisteil 1 kann mit einem Positionierungsloch 11 und einem elastischen Teil 12 versehen sein, wobei das Positionierungsloch 11 ein Durchgangsloch ist und das Positionierungsloch 11 verwendet wird, um den Durchgang des Statordrahtaustrittsendes 200 zu ermöglichen. Das Positionierungsloch 11 kann ein rechteckiges Loch sein, Kanten des rechteckigen Lochs erstrecken sich entlang der ersten Richtung X und der zweiten Richtung Y, und die erste Richtung X ist senkrecht zur zweiten Richtung Y. Eine Abmessung des Positionierungslochs 11 entlang der zweiten Richtung Y kann derjenigen des Statordrahtaustrittsendes 200 entlang der zweiten Richtung Y entsprechen, sodass sich das Statordrahtaustrittsende 200 nicht entlang der zweiten Richtung Y innerhalb des Positionierungslochs 11 bewegen kann. Das Positionierungsloch 11 und der elastische Teil 12 können gleichzeitig durch einen Stanzvorgang gebildet werden. Beim Herstellen des Verbindungsendes 100 kann der Stanzvorgang vor dem Biegevorgang zur Bildung des Basisteils 1 und des Begrenzungsteils 2 durchgeführt werden.

Optional können durch Stanzen der Metallplatte entlang einer halbumschließenden Linie wie etwa einer U-förmigen Linie und anschließendes Herstellen des Teils, der durch die gebogene und verformte U-förmige Linie umschlossen wird, das Positionierungsloch 11 und der elastische Teil 12 gleichzeitig gebildet werden, wobei der verformte Teil der elastische Teil 12 ist und der durch das Verformen gebildete ausgehöhlte Teil das Positionierungsloch 11 ist. Nach dem Stanzvorgang kann der elastische Teil 12 vor dem Biegen rechteckig oder abgerundet rechteckig sein. Durch den vorstehend erwähnten Prozess werden der elastische Teil 12 und der Basisteil 1 als ein Stück gebildet, und der elastische Teil 12 kann in eine Bogenform gebogen sein und weist Elastizität auf.

Wie in FIG. 1 gezeigt, kann ein Basisende des elastischen Teils 12 ein durch Stanzen gebildetes Prozessloch 13 aufweisen. Das Prozessloch 13 kann ein Rundloch sein. Das Prozessloch 13 kann sich an der Ecke der halbumschließenden Linie befinden. Darüber hinaus kann das Prozessloch 13 die Beanspruchung des Verbindungsendes 100 reduzieren.

Es versteht sich, dass die U-förmige Linie über den Basisteil 1 und den Begrenzungsteil 2 verlaufen kann und daher beim Bilden des elastischen Teils 12 auch ein Loch (nicht das Positionierungsloch 11) an dem Begrenzungsteil 2 gebildet werden kann, sodass die Länge des elastischen Teils 12 größer sein kann, ohne die Abmessung des Positionierungslochs 11 entlang der ersten Richtung X zu ändern, und somit wird der elastische Teil stabiler gegen das Statordrahtaustrittsende 200 gedrückt.

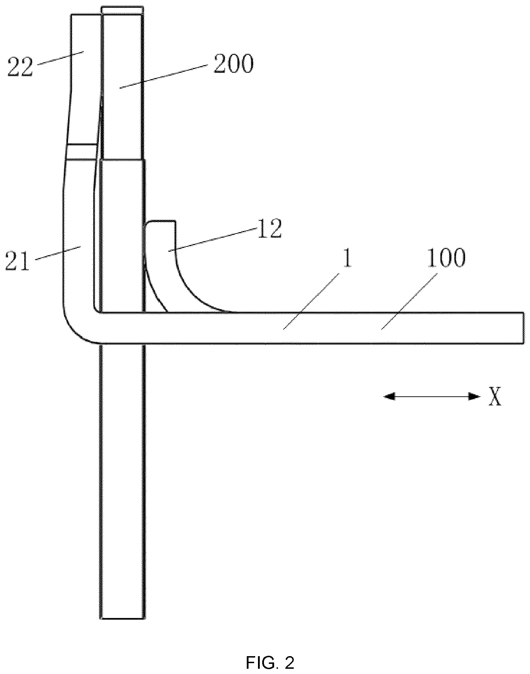

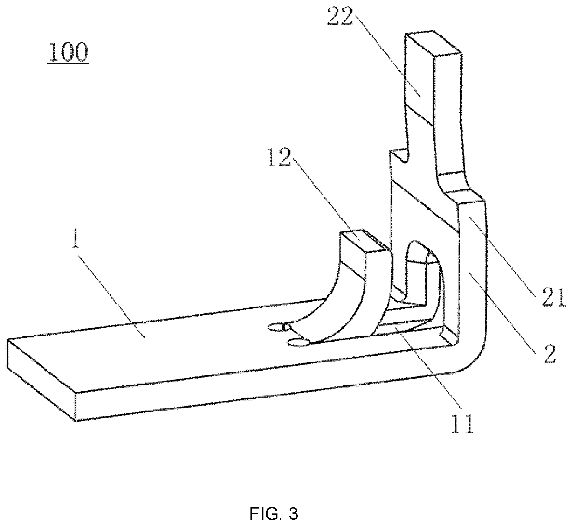

Wie in den Figuren 2 und 3 gezeigt, verläuft das Statordrahtaustrittsende 200 durch das Positionierungsloch 11. Der elastische Teil 12 steht in engem Kontakt mit einer Seitenoberfläche des Statordrahtaustrittsendes 200 und übt eine elastische Kraft auf das Statordrahtaustrittsende 200 aus, um zu bewirken, dass die andere Seitenoberfläche des Statordrahtaustrittsendes 200 in der entgegengesetzten Richtung in engem Kontakt mit dem Schweißteil 22 steht, sodass sich das Statordrahtaustrittsende 200 nicht entlang der ersten Richtung X innerhalb des Positionierungslochs 11 bewegen kann. Das Statordrahtaustrittsende 200 kann sich nicht in die erste Richtung X und in die zweite Richtung Y bewegen, was den tatsächlichen Positionsfehler des Statordrahtaustrittsendes 200 in der ersten Richtung X und in der zweiten Richtung Y reduzieren oder beseitigen und die Beanspruchung der Schweißpunkte reduzieren kann. Infolgedessen ist die Schweißstabilität höher, der Schweißpunkt weist eine höhere Festigkeit auf, und somit können strenge Anforderungen an Vibrationsbelastungen im Fahrzeugumfeld leicht erfüllt werden. Der Begrenzungsteil 2 umfasst einen Übergangsteil 21 und einen Schweißteil 22. Der Begrenzungsteil 2 ist über den Übergangsteil 21 mit dem Basisteil 1 verbunden. Der Schweißteil 22 kann sich entlang (einschließlich im Wesentlichen entlang) der axialen Richtung des Stators des Motors erstrecken. Eine Abmessung des Übergangsteils 21 entlang der zweiten Richtung Y kann größer als diejenige des Schweißteils 22 entlang der zweiten Richtung Y sein. Die Abmessung des Schweißteils 22 entlang der zweiten Richtung Y kann geringfügig größer als diejenige des Statordrahtaustrittsendes 200 entlang der zweiten Richtung Y sein. Zum Beispiel überragt sie auf beiden Seiten des Schweißteils 22 die Kante des Statordrahtaustrittsendes 200 um 5 % bis 20 %. Mit anderen Worten, die Abmessung des Schweißteils 22 in der zweiten Richtung Y (auch als Breite bezeichnet) kann 110 % bis 140 % der Abmessung des Statordrahtaustrittsendes 200 in der zweiten Richtung Y (auch als Breite bezeichnet) betragen. Die Abmessung des Übergangsteils 21 entlang der zweiten Richtung Y kann gleich derjenigen des Basisteils 1 entlang der zweiten Richtung Y sein.

Der Schweißteil 22 kann gegenüber dem Übergangsteil 21 zu der Seite versetzt sein, an der sich der elastische Teil 12 befindet, sodass das Statordrahtaustrittsende 200 unter der Wirkung der durch den elastischen Teil 12 ausgeübten elastischen Kraft mit dem Schweißteil 22 in Kontakt steht und zwischen dem Statordrahtaustrittsende 200 und dem Übergangsteil 21 ein Spalt vorhanden ist.

Das Verbindungsende 100 kann durch Schweißen mit dem Statordrahtaustrittsende 200 verbunden sein. Darüber hinaus ist das Statordrahtaustrittsende 200 durch Schweißen mit dem Schweißteil 22 des Kollektorrings 100 verbunden. Das Statordrahtaustrittsende 200 ist so positioniert, dass die durch den Positionsfehler verursachte Beanspruchung am Statordrahtaustrittsende 200 geringer ist, sodass die Schweißstabilität höher ist und der Schweißpunkt eine höhere Festigkeit aufweist. Infolgedessen hält der Schweißpunkt Vibrationsbelastungen stand und ist nicht störanfällig. Der Schweißteil 22 steht in engem Kontakt mit dem Statordrahtaustrittsende 200, und die Breite des Schweißteils 22 ist geringfügig größer als diejenige des Statordrahtaustrittsendes 200, was ebenfalls zum Verbessern der Schweißstabilität beiträgt.

Selbstverständlich ist die vorliegende Anmeldung nicht auf die vorstehend genannten Ausführungsformen beschränkt, und Fachleute können im Rahmen der Lehre der vorliegenden Anmeldung verschiedene Modifikationen an den vorstehend genannten Ausführungsformen vornehmen, ohne vom Schutzumfang der vorliegenden Anmeldung abzuweichen.
(i) Bei den vorstehend genannten Ausführungsformen ist die Länge des elastischen Teils 12 größer, sodass auch im Begrenzungsteil 2 ein Stanzloch gebildet wird. Das Stanzloch ist jedoch nicht notwendig. Ein Stanzloch darf nur im Basisteil ausgebildet sein, während im Begrenzungsteil kein Stanzloch ausgebildet sein darf.
(ii) Bei den vorstehend genannten Ausführungsformen ist die Metallplatte entlang der U-förmigen Linie gestanzt. Der elastische Teil kann jedoch einfach durch Stanzen der Metallplatte entlang einer halbumschließenden, nichtgeschlossenen Linie gebildet sein.

### Liste der Bezugszeichen

- 100: Verbindungsende;
- 200: Statordrahtaustrittsende;
- 1: Basisteil;
- 11: Positionierungsloch;
- 12: elastischer Teil;
- 13: Prozessloch;
- 2: Begrenzungsteil;
- 21: Übergangsteil;
- 22: Schweißteil;
- X: erste Richtung;
- Y: zweite Richtung.

## Patentansprüche

1. Kollektorring für einen Motor, wobei der Kollektorring ein Verbindungsende (100) aufweist, wobei das Verbindungsende (100) einen Basisteil (1) und einen Schweißteil (22) umfasst, der relativ zum Basisteil (1) vertikal ist, der Basisteil (1) mit einem Positionierungsloch (11) und einem elastischen Teil (12) versehen ist, das Positionierungsloch (11) ein Durchgangsloch ist, das Positionierungsloch (11) verwendet wird, um den Durchgang eines Statordrahtaustrittsendes (200) des Motors zu ermöglichen,
und der elastische Teil (12) so ausgebildet ist, dass er in der Lage ist, entlang einer ersten Richtung (X), die als Längsrichtung des Basisteils (1) dient, eine elastische Kraft auf das Statordrahtaustrittsende (200) auszuüben, sodass zwei gegenüberliegende Seitenoberflächen des Statordrahtaustrittsendes (200) entlang der ersten Richtung (X) in engem Kontakt mit dem Basisteil (1) bzw. dem Schweißteil (22) stehen.

2. Kollektorring für einen Motor nach Anspruch 1, wobei eine Abmessung des Positionierungslochs (11) entlang einer zweiten Richtung (Y) gleich einer Abmessung des Statordrahtaustrittsendes (200) entlang der zweiten Richtung (Y) ist, die erste Richtung (X) senkrecht zur zweiten Richtung (Y) ist und die zweite Richtung (Y) mit einer Breitenrichtung des Basisteils (1) übereinstimmt.

3. Kollektorring für einen Motor nach Anspruch 1, wobei das Verbindungsende (100) ferner einen Begrenzungsteil (2) umfasst, der Begrenzungsteil (2) einen Übergangsteil (21) und den Schweißteil (22) umfasst, der Schweißteil (22) über den Übergangsteil (21) mit dem Basisteil (1) verbunden ist, der Begrenzungsteil (2) und der elastische Teil (12) sich auf zwei gegenüberliegenden Seiten des Positionierungslochs (11) in der ersten Richtung (X) befinden und unter der Wirkung der durch den elastischen Teil (12) ausgeübten elastischen Kraft das Statordrahtaustrittsende (200) am Schweißteil (22) anliegen kann.

4. Kollektorring für einen Motor nach Anspruch 3, wobei der Basisteil (1) und der Begrenzungsteil (2) als ein Stück ausgebildet sind.

5. Kollektorring für einen Motor nach Anspruch 1, wobei der elastische Teil (12) und der Basisteil (1) als ein Stück ausgebildet sind.

6. Kollektorring für einen Motor nach Anspruch 1, wobei das Positionierungsloch (11) und der elastische Teil (12) gleichzeitig gebildet werden, und nachdem der Basisteil (1) gestanzt wurde, ist ein Teil, der sich vom Basisteil (1) aus biegt und verformt, der elastische Teil (12), und ein ausgehöhlter Teil, der aufgrund des Verformens gebildet wurde, ist das Positionierungsloch (11).

7. Kollektorring für einen Motor nach Anspruch 3, wobei eine Abmessung des Übergangsteils (21) entlang einer zweiten Richtung (Y) größer als eine Abmessung des Schweißteils (22) entlang der zweiten Richtung (Y) ist, die Abmessung des Schweißteils (22) entlang der zweiten Richtung (Y) größer als eine Abmessung des Statordrahtaustrittsendes (200) entlang der zweiten Richtung (Y) ist, die zweite Richtung (Y) senkrecht zur ersten Richtung ist und die zweite Richtung (Y) mit der Breitenrichtung des Basisteils (1) übereinstimmt.

8. Kollektorring für einen Motor nach Anspruch 3, wobei der Schweißteil (22) gegenüber dem Übergangsteil (21) zu einer Seite hin versetzt ist, auf der sich der elastische Teil (12) befindet.

9. Motor, wobei der Motor ein Statordrahtaustrittsende (200) und den Kollektorring für einen Motor nach einem der Ansprüche 1 bis 8 umfasst, wobei das Statordrahtaustrittsende (200) mit dem Schweißteil (22) des Kollektorrings durch Schweißen verbunden ist.

10. Motor nach Anspruch 9, wobei der Basisteil (1) mit einer axialen Endfläche eines Stators des Motors verbunden ist und sich der Schweißteil (22) entlang einer axialen Richtung des Stators erstreckt.
